# EUROPEAN PATENT SPECIFICATION

(11) **EP 2 379 640 B1**
(45) Date of publication and mention of the grant of the patent: **03.12.2014**
(21) Application number: 09802079.5
(22) Date of filing: 22.12.2009
(51) Int. Cl.: C08L 67/02, C08L 69/00

(54) **THERMOPLASTIC COMPOSITION WITH IMPROVED LOW TEMPERATURE DUCTILITY**
THERMOPLASTISCHE ZUSAMMENSETZUNG MIT VERBESSERTER TIEFTEMPERATURDUKTILITÄT
COMPOSITION THERMOPLASTIQUE À DUCTILITÉ AMÉLIORÉE À BASSE TEMPÉRATURE

(30) Priority: 29.12.2008 US 345314
(43) Date of publication of application: 26.10.2011
(73) Proprietor: SABIC Innovative Plastics IP B.V., 4612 PX Bergen op Zoom (NL)
(72) Inventor: CHAKRAVARTI, Shreyas, Evansville Indiana 47712 (US); SCHRAUWEN, Bernardus Antonius Gerardus, NL-6029 RN Sterksel (NL); VAN DE GRAMPEL, Robert Dirk, NL-4691 DK Tholen (NL); KIM, Sung Dug, Newburgh Indiana 47630 (US)
(74) Representative: Carpintero Lopez, Francisco
(86) International application number: PCT/US2009/069125
(87) International publication number: WO 2010/078138

(56) References cited:
- US-A1- 2002 132 889
- US-B1- 6 559 270
- US-B2- 6 583 256

## Description

### FIELD OF INVENTION

This invention relates to thermoplastic compositions, and more specifically to those having improved ductility at temperatures below freezing.

### BACKGROUND OF THE INVENTION

Polycarbonates and polyesters, especially poly(alkylene dicarboxylates), and blends thereof are widely employed classes of polymers, in part because of their excellent physical properties including high impact strength. However, these materials often have deficiencies in weatherablity, i.e. yellowing by long term exposure to ultraviolet light, and impact resistance at temperatures below freezing.

U.S. Pat. Nos. 6,583,256 and 6,559,270 disclose methods to make block copolyestercarbonate copolymers and their use in polymer blends. In USP 6,583,256, thermoplastic compositions of at least one block copolyestercarbonate having a degree of polymerization of at least 4, at least one poly(alkylene dicarboxylate) and at least one impact modifier have improved weatherablity such that yellowing and loss of gloss is reduced over prolonged exposure to ultraviolet radiation. These compositions blended with other polymers such as polycarbonates are also disclosed. USP 6,559,270 discloses the compositions of the block copolyestercarbonates itself. Thus, the use of block copolyestercarbonates is known for reducing yellowness.

To address impact behavior, blends of polycarbonates and polyesters typically contain impact modifying rubbers. For low temperature applications, the concentration of impact modifying rubbers is often increased to provide similar impact resistance as compared to, for example, ambient temperature applications. However, higher concentrations of impact modifying rubbers may reduce the flow rate of the total blend, thus making processing more difficult. Alternatively, increasing the molecular weight of the polymers in the blend provides improved lower temperature impact performance; but, again, processing becomes more difficult due to reduced flow of the total blend. Thus, there remains a need to develop an improved polymer blend of polyesters and/or polycarbonates with improved low temperature impact properties, while continuing to have desired flow properties for processing ease. It is to the provision of such that the present invention is primarily directed.

### SUMMARY OF THE INVENTION

The present invention is based on the discovery that combinations of block copolyestercarbonates and impact modifiers blended with other polymers, such as polyesters and polycarbonates, have low temperature impact performance in that the thermoplastic compositions of these materials and articles made therefrom are ductile at 0°C or below and exhibit a lower ductile to brittle transition temperature as compared to a second thermoplastic composition that does not contain the block copolyestercarbonate comprising organic carbonate blocks alternating with arylate blocks. In one aspect of the invention, a thermoplastic composition having improved low temperature impact performance comprises the following and any reaction products thereof:
a) from 3 to 30 weight percent of at least one block copolyestercarbonate comprising organic carbonate blocks alternating with arylate blocks, said arylate blocks comprising structural units derived from at least one 1,3-dihydroxybenzene moiety and at least one aromatic dicarboxylic acid;
b) from 4 to 16 weight percent of at least one impact modifier wherein the impact modifier is selected from the group consisting of an acrylic grafted polymer of a conjugated diene and a methacrylic grafted polymer of a conjugated diene, wherein the impact modifier is co-polymerized with a vinyl aromatic compound, or wherein the impact modifier is a core/shell copolymer of methyl methacrylate, butadiene and styrene or a core/shell copolymer of acrylonitrile, butadiene and styrene, and
c) from 34 to 93 weight percent of at least one polyester or a blend of at least one polyester and at least one polycarbonate wherein the at least one polyester is poly(1,4-butylene terephthalate) and the at least one polycarbonate is bisphenol A polycarbonate,
wherein the thermoplastic composition is ductile at 0°C or below and the thermoplastic composition exhibits a lower ductile to brittle transition temperature as compared to a second thermoplastic composition that does not contain the at least one block copolyestercarbonate comprising organic carbonate blocks alternating with arylate blocks.

In another embodiment, an article comprising the thermoplastic composition is disclosed.

### DETAILED DESCRIPTION OF THE INVENTION

Surprisingly, it is found that by adding block copolyestercarbonates, typically known for their ability to prevent ultraviolet degradation, to a thermoplastic composition of an impact modified polyester or impact modified polyester-polycarbonate blend the low temperature impact performance is increased without having any significant effect on the flow. More surprisingly is the observation that the energy absorption at temperatures below 0°C of the thermoplastic composition with polyester-polycarbonate blend, block copolyestercarbonates and impact modifier exceeds that of any impact modified polymer without the block copolyestercarbonates.

As used herein, the term "ductile" as it relates to a thermoplastic composition refers to a thermoplastic composition that has an impact energy at 0°C of greater than 25 kjoules/m2 according to ISO test 180 or an impact energy at 0°C of greater than 350 joules/meter according to ASTM D-256. The term "ductile to brittle transition temperature (DBT)" means the temperature at which the impact energy value of a resin composition transitions to less than 25 kjoules/m2 according to ISO test 180 or less than 350 joules/meter according to ASTM D256.

As used herein, the term "alkyl" refers to a straight or branched chain monovalent hydrocarbon group; "alkylene" refers to a straight or branched chain divalent hydrocarbon group; "alkylidene" refers to a straight or branched chain divalent hydrocarbon group, with both valences on a single common carbon atom; "alkenyl" refers to a straight or branched chain monovalent hydrocarbon group having at least two carbons joined by a carbon-carbon double bond; "cycloalkyl" refers to a non-aromatic monovalent monocyclic or multicyclic hydrocarbon group having at least three carbon atoms, "cycloalkylene" refers to a non-aromatic alicyclic divalent hydrocarbon group having at least three carbon atoms, with at least one degree of unsaturation; "aryl" refers to an aromatic monovalent group containing only carbon in the aromatic ring or rings; "arylene" refers to an aromatic divalent group containing only carbon in the aromatic ring or rings; "alkylaryl" refers to an aryl group that has been substituted with an alkyl group as defined above, with 4-methylphenyl being an exemplary alkylaryl group; "arylalkyl" refers to an alkyl group that has been substituted with an aryl group as defined above, with benzyl being an exemplary arylalkyl group; "acyl" refers to a an alkyl group as defined above with the indicated number of carbon atoms attached through a carbonyl carbon bridge (-C(=O)-); "alkoxy" refers to an alkyl group as defined above with the indicated number of carbon atoms attached through an oxygen bridge (-O-); and "aryloxy" refers to an aryl group as defined above with the indicated number of carbon atoms attached through an oxygen bridge (-O-).

Unless otherwise indicated, each of the foregoing groups may be unsubstituted or substituted, provided that the substitution does not significantly adversely affect synthesis, stability, or use of the compound. The term "substituted" as used herein means that any one or more hydrogens on the designated atom or group is replaced with another group, provided that the designated atom's normal valence is not exceeded, When the substituent is oxo (i.e., =O), then two hydrogens on the atom are replaced. Combinations of substituents and/or variables are permissible provided that the substitutions do not significantly adversely affect synthesis or use of the compound.

In one embodiment the present invention is a thermoplastic composition having improved low temperature impact performance comprising the following and any reaction products thereof:
a) from 3 to 30 weight percent of at least one block copolyestercarbonate comprising organic carbonate blocks alternating with arylate blocks, said arylate blocks comprising structural units derived from at least one 1,3-dihydroxybenzone moiety and at least one aromatic dicarboxylic acid;
b) from 4 to 16 weight percent of at least one impact modifier wherein the impact modifier is selected from the group consisting of an acrylic grafted polymer of a conjugated diene and a methacrylic grafted polymer of a conjugated diene, wherein the impact modifier is co-polymerized with a vinyl aromatic compound, or wherein the impact modifier is a core/shell copolymer of methyl methacrylate, butadiene and styrene or a core/shell copolymer of acrylonitrile, butadiene and styrene, and
c) from 34 to 93 weight percent of at least one polyester or a blend of at least one polyester and at least one polycarbonate wherein the at least one polyester is poly(1,4-butylene terephthalate) and the at least one polycarbonate is bisphenol A polycarbonate;
wherein the thermoplastic composition is ductile at 0°C or below and the thermoplastic composition exhibits a lower ductile to brittle transition temperature as compared to a second thermoplastic composition that does not contain the at least one block copolyestercarbonate comprising organic carbonate blocks alternating with arylate blocks In one embodiment the composition exhibits a lower ductile to brittle transition temperature by at least 5°C as compared to a second thermoplastic composition that does not contain the at least one block copolyestercarbonate comprising organic carbonate blocks alternating with arylate blocks. In one embodiment, the ductile to brittle transition temperature can be from 5°C to 50°C (or more) lower, as compared to a second thermoplastic composition that does not contain the at least one block copolyestercarbonate comprising organic carbonate blocks alternating with arylate blocks.

The at least one block copolyestercarbonate has the structure shown in formula (1) and disclosed in U.S. Pat. Application Pub. No. 2007/0155913 A1, which is herein fully incorporated by reference: 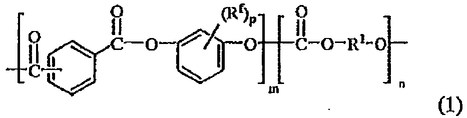 wherein R^{f} is independently a halogen atom, a C₁₋₁₂ hydrocarbon group, or a C₁₋₁₂ halogen substituted hydrocarbon group; R¹ is independently a C₆₋₃₀ arylene group; m is greater than or equal to 1; n is greater than or equal to one; and p is 0 to 4. In an embodiment, m is 2 to 500, and n is 2 to 500. In a specific embodiment, m is 3 to 300, and n is 3 to 300.

Specifically, the polyester unit of the block copolyestercarbonate can be derived from the reaction of a combination of isophthalic and terephthalic diacids (or derivatives thereof) with resorcinol, bisphenol A, or a combination comprising at least one of these, wherein the molar ratio of isophthalate units to terephthalate units is 91:9 to 2:98, specifically 85:15 to 3:97, more specifically 80:20 to 5:95, and still more specifically 70:30 to 10:90. The polycarbonate units can be derived from resorcinol and/or bisphenol A, in a molar ratio of resorcinol carbonate units to bisphenol A carbonate units of 0:100 to 99:1. In an embodiment, the block copolyestercarbonate comprises isophthalate-terephthalate-resorcinol (ITR) ester units. As used herein, isophthalate-terephthalate-resorcinol ester units comprise a combination isophthalate esters, terephthalate esters, and resorcinol esters. In a specific embodiment, isophthalate-terephthalate-resorcinol ester units comprise a combination of isophthalate-resorcinol ester units and terephthalate-resorcinol ester units. The ratio of ITR ester units to the carbonate units in the polyester-polycarbonate is 1:99 to 99:1, specifically 5:95 to 95:5, more specifically 10:90 to 90: 10, still more specifically 20:80 to 80:20. In a specific embodiment, the block copolyestercarbonate is a poly(isophthalate-terephthalate-resorcinol ester)-co-(bisphenol-A carbonate) polymer.

While it is contemplated that other resins may be used in the thermoplastic compositions described herein, the block copolyestercarbonate having ITR ester units and carbonate units are particularly suited for use in the thermoplastic compositions herein. Thus, in another embodiment, the block copolyestercarbonate consist of isophthalate-terephthalate-resorcinol ester units and carbonate units.

The block copolyestercarbonate may have a weight-averaged molecular weight (Mw) of 1,500 to 100,000, specifically 1,700 to 50,000, and more specifically 2,000 to 40,000. Molecular weight determinations are performed using gel permeation chromatography (GPC), using a crosslinked styrene-divinylbenzene column and calibrated to BPA-polycarbonate references. Samples are prepared at a concentration of about 1 mg/ml, and are eluted at a flow rate of about 1.0 ml/min. Desirably, the block copolyestercarbonates have a melt volume rate of about 5 to about 150 cc/10 min., specifically about 7 to about 125 cc/10 min, more specifically about 9 to about 110 cc/10 min, and still more specifically about 10 to about 100 cc/10 min., measured at 300°C and a load of 1.2 kilograms according to ASTM D1238-04.

Preferably, the block copolyestercarbonate comprises organic carbonate blocks selected from the group consisting of bisphenol A carbonate blocks, unsubstituted resorcinol carbonate blocks, and mixtures thereof. Preferably, the block copolyestercarbonate comprises arylate blocks comprising at least one of unsubstituted resorcinol or a substituted resorcinol, in combination with isophthalate or terephthalate or a mixture thereof. More preferably, the block copolyestercarbonate comprises bisphenol A carbonate blocks and isophthalate-terephthalate-resorcinol arylate blocks.

The at least on block copolyestercarbonates of the resin composition preferably is present in a amount ranging from 3 to 30 weight percent and more preferably from 3 to 10 weight percent.

Useful impact modifiers may comprise an acrylic or methacrylic grafted polymer of a conjugated diene or an acrylate elastomer, alone or co-polymerized with a vinyl aromatic compound. These include ASA copolymers; preferred ASA copolymers are acrylonitrile-styrene-butyl acrylate copolymers. Illustrative ASA copolymers typically contain about 35-55% acrylate, and preferably about 40-50% acrylate. Other grafted polymers are the core-shell polymers of the type available from Rohm & Haas, for example ACRYLOID EXL2691, ACRYLOID EXL3330, or PARALOID EXL3300. In general these impact modifiers contain units derived from butadiene in combination with a vinyl aromatic compound, acrylate, or akylacrylate ester such as methacrylate. The aforementioned impact modifiers are believed to be disclosed in Fromuth, et al., U.S. Pat. No. 4,180,494; Owens, U.S. Pat. No. 3,808,180; Farnham, et al., U.S. Pat. No. 4,096,202; and Cohen, et al., U.S. Pat. No. 4,260,693, all incorporated herein by reference. The impact modifier may comprise a two stage polymer having either a butadiene or n-butyl acrylate based rubbery core and a second stage polymerized from methyl methacrylate alone or in combination with styrene. Also present in the first stage are cross linking monomers and graft linking monomers. Examples of the cross linking monomers include 1,3-butylene diacrylate, divinyl benzene and butylene dimethacrylate. Examples of graft linking monomers are allyl acrylate, allyl methacrylate and diallyl maleate. Additional useful impact modifiers are of the type disclosed in U.S. Pat. No. 4,292,233, incorporated by reference. These impact modifiers comprise, generally, a relatively high content of a partially cross-linked butadiene polymer grafted base having grafted thereon acrylonitrile and styrene copolymers.

Preferably, the impact modifier is an acrylic grafted polymer of a conjugated diene, a methacrylic grafted polymer of a conjugated diene. More preferably, the impact modifier is co-polymerized with a vinyl aromatic compound. Alternatively, the impact modifier is a core/shell copolymer of methyl methacrylate, butadiene and styrene (MBS) or a core/shell copolymer of acrylonitrile, butadiene and styrene (ABS).

The at least one polyester may include those polyesters having repeating units of formula (2). 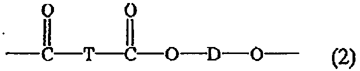 wherein D is a divalent radical derived from a dihydroxy compound, and may be, for example, a C₂₋₁₀ alkylene radical, a C₆₋₃₀ alicyclic radical, a C₆₋₃₀ aromatic radical or a polyoxyalkylene radical in which the alkylene groups contain 2 to 6 carbon atoms, specifically 2, 3, or 4 carbon atoms; and T divalent radical derived from a dicarboxylic acid, and may be, for example, a C₂₋₁₀ alkylene radical, a C₆₋₃₀ alicyclic radical, a C₆₋₃₀ alkyl aromatic radical, or a C₆₋₃₀ aromatic radical. In the present invention, the at least one polyester is poly(1,4-butylene terephthalate).

The polyester may be obtained by interfacial polymerization or melt-process condensation as described above, by solution phase condensation, or by transesterification polymerization. It is possible to use a branched polyester in which a branching agent, for example, a glycol having three or more hydroxyl groups or a trifunctional or multifunctional carboxylic acid has been incorporated. Furthermore, it is sometime desirable to have various concentrations of acid and hydroxyl end groups on the polyester, depending on the ultimate end use of the composition. The polyester described herein is generally completely miscible with the polycarbonate when blended.

The diols useful in the preparation of the polyester polymers are straight chain, or branched and may contain from 2 to 12 carbon atoms. Examples of suitable diols include butane diols such as 1,3- and 1,4-butane diol

Desirably, the blends of polyester and polycarbonate, discussed below, have a melt volume rate of about 5 to about 150 cc/10 min., specifically about 7 to about 125 cc/10 min, more specifically about 9 to about 110 cc/10 min, and still more specifically about 10 to about 100 cc/10 min., measured at 300°C and a load of 1.2 kilograms according to ASTM D1238-04.

The thermoplastic composition comprises a blend of at least one polyester, as described above, and at least one polycarbonate. As used herein, the term "polycarbonate" means compositions having repeating structural carbonate units of the formula (3): 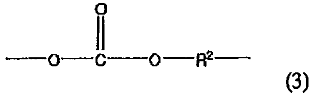 in which at least 60 percent of the total number of R² groups are aromatic organic radicals and the balance thereof are aliphatic, alicyclic, or aromatic radicals.

Polycarbonates may be produced by the interfacial reaction of dihydroxy compounds having the formula HO-R²-OH, which includes dihydroxy aromatic compounds of formula (5):

HO-A¹-Y¹-A²-OH (5)

wherein Y¹, A¹ and A² are as described above.

In a specific embodiment the polycarbonate can be a linear homopolymer derived from bisphenol A, in which each of A¹ and A² is p-phenylene and Y¹ is isopropylidene. The polycarbonate may have an intrinsic viscosity, as determined in chloroform at 25°C, of 0.3 to 1.5 deciliters per gram (dl/g), specifically 0.45 to 1.0 dl/g. The polycarbonates may have a weight average molecular weight (Mw) of 10,000 to 100,000, as measured by gel permeation chromatography (GPC) using a crosslinked styrene-divinyl benzene column, at a sample concentration of 1 milligram per milliliter, and as calibrated with polycarbonate standards.

In an embodiment, the polycarbonate has flow properties suitable for the manufacture of thin articles. Melt volume flow rate (often abbreviated MVR) measures the rate of extrusion of a thermoplastics through an orifice at a prescribed temperature and load. Polycarbonates suitable for the formation of thin articles may have an MVR, measured at 300°C/1.2 kg according to ASTM D1238-04, of 0.5 to 80 cubic centimeters per 10 minutes (cc/10 min). In a specific embodiment, a suitable polycarbonate composition has an MVR measured at 300°C/1.2 kg according to ASTM D1238-04, of 0.5 to 50 cc/10 min, specifically 0.5 to 25 cc/10 min, and more specifically 1 to 15 cc/10 min. Mixtures of polycarbonates of different flow properties may be used to achieve the overall desired flow property.

The at least one polycarbonate in the blend is bisphenol A polycarbonate. The blend of at least one polyester and at least one polycarbonate comprises poly(butylene terephthalate) and bisphenol A polycarbonate.

The polycarbonate or polycarbonate blocks in the copolyestercarbonates can be manufactured by processes such as interfacial polymerization and melt polymerization. Although the reaction conditions for interfacial polymerization may vary, an exemplary process generally involves dissolving or dispersing a dihydric phenol reactant in aqueous caustic soda or potash, adding the resulting mixture to a suitable water-immiscible solvent medium, and contacting the reactants with a carbonate precursor in the presence of a suitable catalyst such as triethylamine or a phase transfer catalyst, under controlled pH conditions, e.g., 8 to 10. The most commonly used water immiscible solvents include methylene chloride, 1,2-dichloroethane, chlorobenzene, toluene, and the like. Suitable carbonate precursors include, for example, a carbonyl halide such as carbonyl bromide or carbonyl chloride, or a haloformate such as a bishaloformates of a dihydric phenol (e.g., the bischloroformates of bisphenol A, hydroquinone, or the like) or a glycol (e.g., the bishaloformate of ethylene glycol, neopentyl glycol, polyethylene glycol, or the like). Combinations comprising at least one of the foregoing types of carbonate precursors may also be used. A chain stopper (also referred to as a capping agent) may be included during polymerization. The chain-stopper limits molecular weight growth rate, and so controls molecular weight in the polycarbonate. A chain-stopper may be at least one of mono-phenolic compounds, mono-carboxylic acid chlorides, and/or mono-chloroformates. Where a chain stopper is incorporated with the polycarbonate, the chain stopper may also be referred to as an end group.

For example, mono-phenolic compounds suitable as chain stoppers include monocyclic phenols, such as phenol, C₁-C₂₂ alkyl-substituted phenols, p-cumyl-phenol, p-tertiary-butyl phenol, hydroxy diphenyl; monoethers of diphenols, such as p-methoxyphenol. Alkyl-substituted phenols include those with branched chain alkyl substituents having 8 to 9 carbon atoms. A mono-phenolic UV absorber may be used as capping agent. Such compounds include 4-substituted-2-hydroxybenzophenones and their derivatives, aryl salicylates, monoesters of diphenols such as resorcinol monobenzoate, 2-(2-hydroxyaryl)-benzotriazoles and their derivatives, 2-(2-hydroxyaryl)-1,3,5-triazines and their derivatives, and the like. Specifically, mono-phenolic chain-stoppers include phenol, p-cumylphenol, and/or resorcinol monobenzoate.

Mono-carboxylic acid chlorides may also be suitable as chain stoppers. These include monocyclic, mono-carboxylic acid chlorides such as benzoyl chloride, C₁-C₂₂ alkyl-substituted benzoyl chloride, 4-methylbenzoyl chloride, halogen-substituted benzoyl chloride, bromobenzoyl chloride, cinnamoyl chloride, 4-nadimidobenzoyl chloride, and mixtures thereof; polycyclic, mono-carboxylic acid chlorides such as trimellitic anhydride chloride, and naphthoyl chloride; and mixtures of monocyclic and polycyclic mono-carboxylic acid chlorides. Chlorides of aliphatic monocarboxylic acids with up to 22 carbon atoms are suitable. Functionalized chlorides of aliphatic monocarboxylic acids, such as acryloyl chloride and methacryoyl chloride, are also suitable. Also suitable are mono-chloroformates including monocyclic, mono-chloroformates, such as phenyl chloroformate, alkyl-substituted phenyl chloroformate, p-cumyl phenyl chloroformate, toluene chloroformate, and mixtures thereof.

Among the phase transfer catalysts that may be used in interfacial polymerization are catalysts of the formula (R³)₄Q⁺X, wherein each R³ is the same or different, and is a C₁₋₁₀ alkyl group; Q is a nitrogen or phosphorus atom; and X is a halogen atom or a C₁₋₈ alkoxy group or C₆₋₁₈ aryloxy group. Suitable phase transfer catalysts include, for example, [CH₃(CH₂)₃]₄NX, [CH₃(CH₂)₃]₄PX, [CH₃(CH₂)₅]₄NX, [CH₃(CH₂)₆]₄NX, [CH₃(CH₂)₄]₄NX, CH₃[CH₃(CH₂)₃]₃NX, and CH₃[CH₃(CH₂)₂]₃NX, wherein X is Cl⁻, Br⁻, a C₁₋₈ alkoxy group or a C₆₋₁₈ aryloxy group. In an embodiment, a specifically useful phase transfer catalyst is CH₃[CH₃(CH₂)₃]₃NCl (methyl tri-n-butyl ammonium chloride). An effective amount of a phase transfer catalyst may be 0.1 to 10 wt% based on the weight of bisphenol in the phosgenation mixture. In another embodiment an effective amount of phase transfer catalyst may be 0.5 to 2 wt% based on the weight of dihydroxy compound in the phosgenation mixture.

Alternatively, melt processes may be used to make polycarbonates or polycarbonate blocks. Generally, in the melt polymerization process, polycarbonates may be prepared by co-reacting, in a molten state, the dihydroxy reactant(s) and a diaryl carbonate ester, such as diphenyl carbonate, in the presence of a transesterification catalyst in a Banbury^{®} mixer, twin screw extruder, or the like to form a uniform dispersion. Volatile monohydric phenol is removed from the molten reactants by distillation and the polymer is isolated as a molten residue. A specifically useful melt process for making polycarbonates uses, a diaryl carbonate ester having electron withdrawing substituents on the aryls. Examples of specifically useful diaryl carbonate esters with electron withdrawing substituents include bis(4-nitrophenyl)carbonate, bis(2-chlorophenyl)carbonate, bis(4-chlorophenyl)carbonate, bis(methyl salicyl)carbonate (BMSC), bis(4-methylcarboxylphenyl) carbonate, bis(2-acetylphenyl) carboxylate, bis(4-acetylphenyl) carboxylate, or a combination comprising at least one of these. In addition, suitable transesterification catalyst for use may include phase transfer catalysts of formula (R³)₄Q⁺X above, wherein each R³, Q, and X are as defined above. Examples of suitable transesterification catalysts include tetrabutylammonium hydroxide, methyltributylammonium hydroxide, tetrabutylammonium acetate, tetrabutylphosphonium hydroxide, tetrabutylphosphonium acetate, tetrabutylphosphonium phenolate, or a combination comprising at least one of these.

Branched polycarbonate are also useful, as well as blends of a linear polycarbonate and a branched polycarbonate. The branched polycarbonates may be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents may be added at a level of 0.05 to 2.0 wt% of the polycarbonate. All types of polycarbonate end groups are contemplated as being useful in the polycarbonate, provided that such end groups do not significantly affect desired properties of the thermoplastic compositions.

In a preferred embodiment, The thermoplastic composition having improved low temperature impact performance comprises the following and any reaction products thereof:
a) from 3 to 30 weight percent of at least one block copolyestercarbonate comprising organic carbonate blocks alternating with arylate blocks, said arylate blocks comprising structural units derived from at least one 1,3-dihydroxybenzene moiety and at least one aromatic dicarboxylic acid;
b) from 4 to 16 weight percent of at least one impact modifier wherein the impact modifier is selected from the group consisting of an acrylic grafted polymer of a conjugated diene and a methacrylic grafted polymer of a conjugated diene, wherein the impact modifier is co-polymerized with a vinyl aromatic compound, or wherein the impact modifier is a core/shell copolymer of methyl methacrylate, butadiene and styrene or a core/shell copolymer of acrylonitrlle, butadiene and styrene, and
c) from 34 to 93 weight percent of a blend of at least one polyester and at least one polycarbonate wherein the at least one polyester is poly(1,4-butylene terephthalate) and the at least one polycarbonate is bisphenol A polycarbonate;
wherein the thermoplastic composition is ductile at 0°C or below.

In another embodiment the thermoplastic composition further comprises a flame retarding composition. Suitable flame retardant that may be added may be organic compounds that include phosphorus, bromine, and/or chlorine. Non-brominated and non-chlorinated phosphorus-containing flame retardants may be preferred in certain applications for regulatory reasons, for example organic phosphates and organic compounds containing phosphorus-nitrogen bonds.

One type of exemplary organic phosphate is an aromatic phosphate of the formula (GO)₃P=O, wherein each G is independently an alkyl, cycloalkyl, aryl, alkylaryl, or arylalkyl group, provided that at least one G is an aromatic group. Two of the G groups may be joined together to provide a cyclic group, for example, diphenyl pentaerythritol diphosphate. Other suitable aromatic phosphates may be, for example, phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, or the like. A specific aromatic phosphate is one in which each G is aromatic, for example, triphenyl phosphate, tricresyl phosphate, isopropylated triphenyl phosphate, and the like.

Di- or polyfunctional aromatic phosphorus-containing compounds are also useful, for example, compounds of the formulas below: 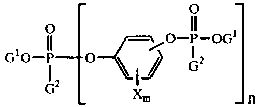 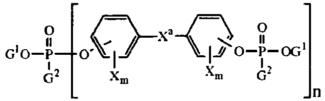 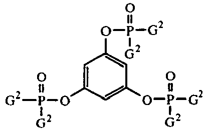 wherein each G¹ is independently a hydrocarbon having 1 to 30 carbon atoms; each G² is independently a hydrocarbon or hydrocarbonoxy having 1 to 30 carbon atoms; each X^{a} is independently a hydrocarbon having 1 to 30 carbon atoms; each X is independently a bromine or chlorine; m is 0 to 4, and n is 1 to 30. Examples of suitable di- or polyfunctional aromatic phosphorus-containing compounds include resorcinol tetraphenyl diphosphate (RDP), the bis(diphenyl) phosphate of hydroquinone and the bis(diphenyl) phosphate of bisphenol-A, respectively, their oligomeric and polymeric counterparts, and the like.

Exemplary suitable flame retardant compounds containing phosphorus-nitrogen bonds include phosphonitrilic chloride, phosphorus ester amides, phosphoric acid amides, phosphonic acid amides, phosphinic acid amides, tris(aziridinyl) phosphine oxide. When present, phosphorus-containing flame retardants can be present in amounts of 0.1 to 10 percent by weight, based on the total weight of the polyester-polycarbonate and poly(alkylene ester).

Halogenated materials may also be used as flame retardants, for example halogenated compounds and resins of formula (10): 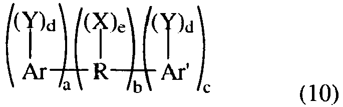 wherein R is an alkylene, alkylidene or cycloaliphatic linkage, e.g., methylene, ethylene, propylene, isopropylene, isopropylidene, butylene, isobutylene, amylene, cyclohexylene, cyclopentylidene, or the like; or an oxygen ether, carbonyl, amine, or a sulfur containing linkage, e.g., sulfide, sulfoxide, sulfone, or the like. R can also consist of two or more alkylene or alkylidene linkages connected by such groups as aromatic, amino, ether, carbonyl, sulfide, sulfoxide, sulfone, or the like.

Ar and Ar' in formula (10) are each independently mono- or polycarbocyclic aromatic groups such as phenylene, biphenylene, terphenylene, naphthylene, or the like.

Y is an organic, inorganic, or organometallic radical, for example: halogen, e.g., chlorine, bromine, iodine, fluorine; ether groups of the general formula OE, wherein E is a monovalent hydrocarbon radical similar to X; monovalent hydrocarbon groups of the type represented by R; or other substituents, e.g., nitro, cyano, and the like, said substituents being essentially inert provided that there is at least one and preferably two halogen atoms per aryl nucleus.

When present, each X is independently a monovalent hydrocarbon group, for example an alkyl group such as methyl, ethyl, propyl, isopropyl, butyl, decyl, or the like; an aryl groups such as phenyl, naphthyl, biphenyl, xylyl, tolyl, or the like; and arylalkyl group such as benzyl, ethylphenyl, or the like; a cycloaliphatic group such as cyclopentyl, cyclohexyl, or the like. The monovalent hydrocarbon group may itself contain inert substituents.

Each d is independently 1 to a maximum equivalent to the number of replaceable hydrogens substituted on the aromatic rings comprising Ar or Ar'. Each e is independently 0 to a maximum equivalent to the number of replaceable hydrogens on R. Each a, b, and c is independently a whole number, including 0. When b is not 0, neither a nor c may be 0. Otherwise either a or c, but not both, may be 0. Where b is 0, the aromatic groups are joined by a direct carbon-carbon bond.

The hydroxyl and Y substituents on the aromatic groups, Ar and Ar', can be varied in the ortho, meta or para positions on the aromatic rings and the groups can be in any possible geometric relationship with respect to one another.

Included within the scope of the above formula (10) are bisphenols of which the following are representative: 2,2-bis-(3,5-dichlorophenyl)-propane; bis-(2-chlorophenyl)-methane; bis(2,6-dibromophenyl)-methane; 1,1-bis-(4-iodophenyl)-ethane; 1,2-bis-(2,6-dichlorophenyl)-ethane; 1,1-bis-(2-chloro-4-iodophenyl)ethane; 1,1-bis-(2-chloro-4-methylphenyl)-ethane; 1,1-bis-(3,5-dichlorophenyl)-ethane; 2,2-bis-(3-phenyl-4-bromophenyl)-ethane; 2,6-bis-(4,6-dichloronaphthyl)-propane; 2,2-bis-(2,6-dichlorophenyl)-pentane; 2,2-bis-(3,5-dibromophenyl)-hexane; bis-(4-chlorophenyl)-phenyl-methane; bis-(3,5-dichlorophenyl)-cyclohexylmethane; bis-(3-nitro-4-bromophenyl)-methane; bis-(4-hydroxy-2,6-dichloro-3-methoxyphenyl)-methane; and 2,2-bis-(3,5-dichloro-4-hydroxyphenyl)-propane 2,2 bis-(3-bromo-4-hydroxyphenyl)-propane. Also included within the above structural formula (10) are: 1,3-dichlorobenzene, 1,4-dibromobenzene, 1,3-dichloro-4-hydroxybenzene, and biphenyls such as 2,2'-dichlorobiphenyl, polybrominated 1,4-diphenoxybenzene, 2,4'-dibromobiphenyl, and 2,4'-dichlorobiphenyl as well as decabromo diphenyl oxide, and the like.

Also useful are oligomeric and polymeric halogenated aromatic compounds, such as a copolycarbonate of bisphenol A and tetrabromobisphenol A and a carbonate precursor, e.g., phosgene. Metal synergists, e.g., antimony oxide, may also be used with the flame retardant. When present, halogen containing flame retardants can be present in amounts of 0.1 to 10 percent by weight, based on the total weight of the polyester-polycarbonate and poly(alkylene ester).

Inorganic flame retardants may also be used, for example salts of C₂₋₁₆ alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate, and the like; salts formed by reacting for example an alkali metal or alkaline earth metal (for example lithium, sodium, potassium, magnesium, calcium and harium salts) and an inorganic acid complex salt, for example, an oxo-anion, such as alkali metal and alkaline-earth metal salts of carbonic acid, such as Na₂CO₃, K₂CO₃, MgCO₃, CaCO₃, and BaCO₃ or fluoro-anion complexes such as Li₃AlF₆, BaSiF₆, KBF₄, K₃AlF₆, KAlF₄, K₂SiP₆ and/or Na₃AlF₆ or the like. When present, inorganic flame retardant salts can be present in amounts of 0.1 to 5 percent by weight, based on the total weight of the polyester-polycarbonate and poly(alkylene ester).

The thermoplastic composition may include various other additives ordinarily incorporated with thermoplastic compositions of this type, with the proviso that the additives are selected so as not to significantly adversely affect the desired properties of the thermoplastic composition. Mixtures of additives may be used. Such additives may be mixed at a suitable time during the mixing of the components for forming the thermoplastic composition.

The thermoplastic composition may comprise a colorant such as a pigment and/or dye additive. Suitable pigments include for example, inorganic pigments such as metal oxides and mixed metal oxides such as zinc oxide, titanium dioxides, iron oxides or the like; sulfides such as zinc sulfides, or the like; aluminates; sodium sulfo-silicates, sulfates, chromates, or the like; carbon blacks; zinc ferrites; ultramarine blue; Pigment Brown 24; Pigment Red 101; Pigment Yellow 119; organic pigments such as azos, di-azos, quinacridones, perylenes, naphthalene tetracarboxylic acids, flavanthrones, isoindolinones, tetrachloroisoindolinones, anthraquinones, anthanthrones, dioxazines, phthalocyanines, and azo lakes; Pigment Blue 60, Pigment Red 122, Pigment Red 149, Pigment Red 177, Pigment Red 179, Pigment Red 202, Pigment Violet 29, Pigment Blue 15, Pigment Blue 15:4, Pigment Blue 28, Pigment Green 7, Pigment Yellow 147 and Pigment Yellow 150, or combinations comprising at least one of the foregoing pigments. Pigments can be used in amounts of 0.01 to 10 percent by weight, based on the total weight of the polyester-polycarbonate and poly(alkylene ester), where the use of the pigment does not significantly adversely affect the desired properties of the thermoplastic composition.

Suitable dyes can be organic materials and include, for example, coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly (C₂₋₈) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; naphthalimide dyes; lactone dyes; fluorophores such as anti- stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3"",5""-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p-phenylen-bis(5-phenyloxazole); rhodamine 700; rhodamine 800; pyrene; chrysene; rubrene; coronene, or the like, or combinations comprising at least one of the foregoing dyes. Dyes can be used in amounts of 0.01 to 10 percent by weight, based on the total weight of the polyester-polycarbonate and poly(alkylene ester), where the use of the dyes does not significantly adversely affect the desired properties of the thermoplastic composition.

The thermoplastic composition may further comprise an antioxidant. Suitable antioxidant additives include, for example, organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations comprising at least one of the foregoing antioxidants. Antioxidants can be used in amounts of 0.0001 to 1 percent by weight, based on the total weight of the polyester-polycarbonate and poly(alkylene ester).

Suitable heat stabilizer additives include, for example, organophosphites such as triphenyl phosphite, tris-(2,6-dimethylphenyl)phosphite, tris-(mixed mono-and dinonylphenyl)phosphite or the like; phosphonates such as dimethylbenzene phosphonate or the like, phosphates such as trimethyl phosphate, or the like, or combinations comprising at least one of the foregoing heat stabilizers. Heat stabilizers can be used in amounts of 0.0001 to 1 percent by weight, based on the total weight of the polyester-polycarbonate and poly(alkylene ester).

Light stabilizers and/or ultraviolet light (UV) absorbing additives may also be used. Suitable light stabilizer additives include, for example, benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone, or the like, or combinations comprising at least one of the foregoing light stabilizers. Light stabilizers can be used in amounts of 0.0001 to 1 percent by weight, based on the total weight of the polyester-polycarbonate and poly(alkylene ester).

Suitable UV absorbing additives include for example, hydroxybenzophenones; hydroxybenzotriazoles; hydroxybenzotriazines; cyanoacrylates; oxanilides; benzoxazinones; 2- (2H-benzotriazol-2-yl)-4-(1,1,3,3-tetramethylbutyl)-phenol (CYASORB^{®} 5411); 2-hydroxy-4-n-octyloxybenzophenone (CYASORB^{®} 531); 2-[4,6-bis(2,4-dimethylphenyl)-1,3,5-triazin-2-yl]- 5-(octyloxy)-phenol (CYASORB^{®} 1164); 2,2'-(1,4- phenylene)bis(4H-3,1-benzoxazin-4-one) (CYASORB^{®} UV- 3638); 1,3-bis[(2-cyano-3,3-diphenylacryloyl)oxy]-2,2-bis[[(2-cyano-3,3-diphenylacryloyl)oxy]methyl]propane (UVINUL^{®} 3030); 2,2'-(1,4-phenylene) bis(4H-3,1-benzoxazin-4-one); 1,3-bis[(2-cyano-3,3-diphenylacryloyl)oxy]-2,2-bis[[(2-cyano-3,3-diphenylacryloyl)oxy]methyl] propane; nanosize inorganic materials such as titanium oxide, cerium oxide, and zinc oxide, all with particle size less than 100 nanometers; or the like, or combinations comprising at least one of the foregoing UV absorbers. UV absorbers can be used in amounts of 0.0001 to 1 percent by weight, based on the total weight of the polyester-polycarbonate and poly(alkylene ester).

Plasticizers, lubricants, and/or mold release agents additives may also be used. There is considerable overlap among these types of materials, which include, for example, phthalic acid esters such as dioctyl-4,5-epoxy-hexahydrophthalate; tris-(octoxycarbonylethyl)isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol-A; poly-alpha-olefins; epoxidized soybean oil; silicones, including silicone oils; esters, for example, fatty acid esters such as alkyl stearyl esters, e.g., methyl stearate; stearyl stearate, pentaerythritol tetrastearate, and the like; mixtures of methyl stearate and hydrophilic and hydrophobic nonionic surfactants comprising polyethylene glycol polymers, polypropylene glycol polymers, and copolymers thereof, e.g., methyl stearate and polyethylene-polypropylene glycol copolymers in a suitable solvent; waxes such as beeswax, montan wax, paraffin wax or the like. Such materials can be used in amounts of 0.001 to 1 percent by weight, specifically 0.01 to 0.75 percent by weight, more specifically 0.1 to 0.5 percent by weight, based on the total weight of the polyester-polycarbonate and poly(alkylene ester).

The term "antistatic agent" refers to monomeric, oligomeric, or polymeric materials that can be processed into polymer resins and/or sprayed onto materials or articles to improve conductive properties and overall physical performance. Examples of monomeric antistatic agents include glycerol monostearate, glycerol distearate, glycerol tristearate, ethoxylated amines, primary, secondary and tertiary amines, ethoxylated alcohols, alkyl sulfates, alkylarylsulfates, alkylphosphates, alkylaminesulfates, alkyl sulfonate salts such as sodium stearyl sulfonate, sodium dodecylbenzenesulfonate or the like, quaternary ammonium salts, quaternary ammonium resins, imidazoline derivatives, sorbitan esters, ethanolamides, betaines, or the like, or combinations comprising at least one of the foregoing monomeric antistatic agents.

Exemplary polymeric antistatic agents include certain polyesteramides polyether-polyamide (polyetheramide) block copolymers, polyetheresteramide block copolymers, polyetheresters, or polyurethanes, each containing polyalkylene glycol moieties polyalkylene oxide units such as polyethylene glycol, polypropylene glycol, polytetramethylene glycol, and the like. Such polymeric antistatic agents are commercially available, for example Pelestat^{®} 6321 (Sanyo) or Pebax^{®} MH1657 (Atofina), Irgastat^{®} P18 and P22 (Ciba-Geigy). Other polymeric materials that may be used as antistatic agents are inherently conducting polymers such as polyaniline (commercially available as PANIPOL^{®}EB from Panipol), polypyrrole and polythiophene (commercially available from Bayer), which retain some of their intrinsic conductivity after melt processing at elevated temperatures. In one embodiment, carbon fibers, carbon nanofibers, carbon nanotubes, carbon black, or any combination of the foregoing may be used in a polymeric resin containing chemical antistatic agents to render the composition electrostatically dissipative. Antistatic agents can be used in amounts of 0.0001 to 5 percent by weight, based on the total weight of the polyester-polycarbonate and poly(alkylene ester).

The thermoplastic composition may further comprise an ionizing radiation stabilizing additive. Exemplary ionizing radiation stabilizing additives include certain aliphatic alcohols, aromatic alcohols, aliphatic diols, aliphatic ethers, esters, diketones, alkenes, thiols, thioethers and cyclic thioethers, sulfones, dihydroaromatics, diethers, nitrogen compounds, or a combination comprising at least one of the foregoing. Alcohol-based stabilizing additives may be selected from mono, di-, or polysubstituted alcohols, and can be straight, branched, cyclic and/or aromatic. Suitable aliphatic alcohols may include alkenols with sites of unsaturation, examples of which include 4-methyl-4-penten-2-ol, 3-methyl-pentene-3-ol, 2-methyl-4-penten-2-ol, 2,4-dimethyl-4-penten-2-ol, 2-phenyl-4-penten-2-ol, and 9-decen-1-ol; tertiary alcohols including 3-hydroxy-3-methyl-2-butanone, 2-phenyl-2-butanol, and the like; hydroxy-substituted tertiary cycloaliphatics such as 1-hydroxy-1-methyl-cyclohexane; and hydroxymethyl aromatics having an aromatic ring with carbinol substituents such as a methylol group (-CH₂OH) or a more complex hydrocarbon group such as (-CRHOH) or (-CR₂OH), wherein R is straight chain C₁-C₂₀ alkyl or branched C₁-C₂₀ alkyl. Exemplary hydroxy carbinol aromatics include benzhydrol, 2-phenyl-2-butanol, 1,3-benzenedimethanol, benzyl alcohol, 4-benzyloxy-benzyl alcohol, and benzyl-benzyl alcohol.

Useful classes of ionizing radiation stabilizing additives are di- and polyfunctional aliphatic alcohols, also referred to as aliphatic diols and aliphatic polyols. Specifically useful are aliphatic diols of formula (11):

HO-(C(A')(A"))_{d}-S-(C(B')(B"))ₑ-OH (11)

wherein A', A", B', and B" are each independently H or C₁-C₆ alkyl; S is C₁-C₂₀ alkyl, C₂-C₂₀ alkyleneoxy, C₃-C₆ cycloalkyl, or C₃-C₆ substituted cycloalkyl; and d and e are each 0 or 1, with the proviso that, when d and e are each 0, S is selected such that both -OH groups are not connected directly to a single common carbon atom.

In formula (11), A', A", B', and B" can each be independently selected from H, methyl, ethyl, n-propyl, isopropyl, n-butyl, sec-butyl, t-butyl, n-pentyl, 2-pentyl, 3-pentyl, isopentyl, neopentyl, n-hexyl, 2-hexyl, 3-hexyl, 2-methyl pentyl, 3-methylpentyl, 2,2-dimethylbutyl, 2,3-dimethylbutyl, and the like, and a combination comprising at least one of the foregoing alkyl groups.

Spacer group S can be selected from methanediyl, ethanediyl, 1,1-ethanediyl, 1,1-propanediyl, 1,2-propanediyl, 1,3-propanediyl, 2,2-propanediyl, 1,1-butanediyl, 1,2-butanediyl, 1,3-butanediyl, 1,4-butanediyl, 2,2-butanediyl, 2,3-butanediyl, 1,1-pentanediyl, 1,2-pentanediyl, 1,3- pentanediyl, 1,4- pentanediyl, 1,5- pentanediyl, 2,2-pentanediyl, 2,3-pentanediyl, 2,4-pentanediyl, 3,3- pentanediyl, 2-methyl-1,1-butanediyl, 3-methyl-1,1-butanediyl, 2-methyl-1,2-butanediyl, 2-methyl-1,3-butanediyl, 2-methyl-1,4-butanediyl, 2-methyl-2,2-butanediyl, 2-methyl-2,3-butanediyl, 2,2-dimethyl-1,1-propanediyl, 2,2-dimethyl-1,2-propanediyl, 2,2-dimethyl-1,3-propanediyl, 3,3-dimethyl-1,1-propanediyl, 3,3-dimethyl-1,2-propanediyl, 3,3-dimethyl-2,2-propanediyl, 1,1-dimethyl-2,3-propanediyl, 3,3-dimethyl-2,2-propanediyl, 1,1-hexanediyl, 1,2-hexanediyl, 1,3-hexanediyl, 1,4- hexanediyl, 1,5-hexanediyl, 1,6- hexanediyl, 2,2- hexanediyl, 2,3- hexanediyl, 2,4- hexanediyl, 2,5-hexanediyl, 3,3- hexanediyl, 2-methyl-1,1-pentanediyl, 3-methyl-1,1-pentanediyl, 2-methyl-1,2-pentanediyl, 2-methyl-1,3-pentanediyl, 2-methyl-1,4-pentanediyl, 2-methyl-2,2-pentanediyl, 2-methyl-2,3-pentanediyl, 2-methyl-2,4-pentanediyl, 2,2-dimethyl-1,1-butanediyl, 2,2-dimethyl-1,2-butanediyl, 2,2-dimethyl-1,3-butanediyl, 3,3-dimethyl-1,1-butanediyl, 3,3-dimethyl-1,2-butanediyl, 3,3-dimethyl-2,2-butanediyl, 1,1-dimethyl-2,3-butanediyl, 3,3-dimethyl-2,2-butanediyl, and the like; isomers of octanediyl, decanediyl, undecanediyl, dodecanediyl, hexadecanediyl, octadecanediyl, icosananediyl, and docosananediyl; and substituted and unsubstituted cyclopropanediyl, cyclobutanediyl, cyclopentanediyl, cyclohexanediyl, wherein substituents may be the points of radical attachment, such as in 1,4-dimethylenecyclohexane, or may include branched and straight chain alkyl, cycloalkyl, and the like. Additionally, the spacer group S may be selected from one or more diradicals comprising polyalkyleneoxy units, such as ethyleneoxy, 1,2-propyleneoxy, 1,3-propyleneoxy, 1,2-butyleneoxy, 1,4-butyleneoxy, 1,6-hexyleneoxy, and the like; and a combination comprising at least one of these.

Specific examples of suitable aliphatic diols include ethylene glycol, propylene glycol, 1,3-propanediol, 1,2-butanediol, 1,4-butanediol, meso-2,3-butanediol, 1,2-pentanediol, 2,3-pentanediol, 1,4-pentanediol, 1,4-hexandiol, and the like; alicyclic alcohols such as 1,3-cyclobutanediol, 2,2,4,4-tetramethylcyclobutanediol, 1,2-cyclopentanediol, 1,2-cyclohexanediol, 1,3-cyclohexanediol, 1,4-cyclohexanediol, 1,4-dimethylolcyclohexane, and the like; branched acyclic diols such as 2,3-dimethyl-2,3-butanediol (pinacol), and 2-methyl-2,4-pentanediol (hexylene glycol); and polyalkyleneoxy-containing alcohols such as polyethylene glycol, polypropylene glycol, block or random poly(ethyleneglycol-co-propyleneglycols), and diols of copolymers containing polyalkyleneoxy-groups. Useful polyols may include polyaryleneoxy compounds such as polyhydroxystyrene; alkyl polyols such as polyvinylalcohol, polysaccharides, and esterified polysaccharides. A combination comprising at least one of the foregoing may also be useful. Specifically suitable diols include 2-methyl-2,4-pentanediol (hexylene glycol), polyethylene glycol, and polypropylene glycol.

Suitable aliphatic ethers may include alkoxy-substituted cyclic or acyclic alkanes such as, for example, 1,2-dialkoxyethanes, 1,2-dialkoxypropanes, 1,3-dialkoxypropanes, alkoxycyclopentanes, alkoxycyclohexanes, and the like. Ester compounds (-COOR) may be useful as stabilizers wherein R may be a substituted or unsubstituted, aromatic or aliphatic, hydrocarbon and the parent carboxy compound may likewise be substituted or unsubstituted, aromatic or aliphatic, and/or mono- or polyfunctional. When present, substituents may include, for example, C₁-C₈ alkyl, C₁-C₈ alkyl ether, C₆-C₂₀ aryl, and the like. Esters which have proven useful include tetrakis(methylene [3,5-di-t-butyl-4-hydroxy-hydrocinnamate])methane, 2,2'-oxamido bis(ethyl-3-(3,5-di-t-butyl-4-hydroxyphenyl) propionate, and trifunctional hindered phenolic ester compounds such as GOOD-RITE^{®} 3125, available from B.F. Goodrich in Cleveland OH.

Diketone compounds may also be used, specifically those having two carbonyl functional groups and separated by a single intervening carbon atoms such as, for example 2,4-pentadione.

Sulfur-containing compounds, suitable for use as stabilizing additives, can include thiols, thioethers and cyclic thioethers. Thiols include, for example, 2-mercaptobenzothiazole; thioethers include dilaurylthiopropionate; and cyclic thioethers include 1,4-dithiane, 1,4,8,11-tetrathiocyclotetradecane. Cyclic thioethers containing more than one thioether group are useful, specifically those having a single intervening carbon between two thioether groups such as in, for example, 1,3-dithiane. The cyclic ring may contain oxygen or nitrogen members.

Aryl or alkyl sulfone stabilizing additives of general structure R-S(O)₂-R' may also be used, where R and R' comprise C₁-C₂₀ alkyl, C₆-C₂₀aryl, C₁-C₂₀alkoxy, C₆-C₂₀ aryloxy, substituted derivatives thereof, and the like, and wherein at least one of R or R' is a substituted or unsubstituted benzyl. When present, substituents may include, for example, C₁-C₈ alkyl, C₁-C₈ alkyl ether, C₆-C₂₀ aryl, and the like. An example of a specifically useful sulfone is benzylsulfone.

Alkenes may be used as stabilizing additives. Suitable alkenes may include olefins of general structure RR'C=CR"R'" wherein R, R', R", and R'" may each individually be the same or different and may be selected from hydrogen, C₁-C₂₀ alkyl, C₁-C₂₀cycloalkyl, C₁-C₂₀alkenyl, C₁-C₂₀cycloalkenyl, C₆-C₂₀aryl, C₆-C₂₀arylalkyl, C₆-C₂₀alkylaryl, C₁-C₂₀ alkoxy, C₆-C₂₀aryloxy and substituted derivatives thereof. When present, substituents may include, for example, C₁-C₈ alkyl, C₁-C₈ alkyl ether, C₆-C₂₀ aryl, and the like. The olefins may be acyclic, exocyclic, or endocyclic. Examples of specifically useful alkenes include 1,2-diphenyl ethane, allyl phenol, 2,4-dimethyl-1-pentene, limonene, 2-phenyl-2-pentene, 2,4-dimethyl-1-pentene, 1,4-diphenyl-1,3-butadiene, 2-methyl-1-undecene, 1-dodecene, and the like, or a combination comprising at least one of the foregoing.

Hydroaromatic compounds may also be useful as stabilizing additives, including partially hydrogenated aromatics, and aromatics in combination with an unsaturated ring. Specific aromatics include benzene and/or naphthalene based systems. Examples of suitable hydroaromatic compounds include indane, 5,6,7,8-tetrahydro-1-naphthol, 5,6,7,8-tetrahydro-2-naphthol, 9,10-dihydro anthracene, 9,10-dihydrophenanthrene, 1-phenyl-1-cyclohexane, 1,2,3,4-tetrahydro-1-naphthol, and the like, or a combination comprising at least one of the foregoing.

Diethers, including hydrogenated and nonhydrogenated, and substituted and unsubstituted pyrans, may also be used as stabilizing additives. When present, substituents may include C₁-C₈ alkyl, C₁-C₈ alkyl ether, or C₆-C₂₀ aryl. The pyrans may have substituents including C₁-C₂₀alkyl, C₆-C₂₀aryl, C₁-C₂₀alkoxy, or C₆-C₂₀aryloxy, and which may be positioned on any carbon of the pyran ring. Specifically useful substituent groups include C₁-C₂₀ alkoxy or C₆-C₂₀ aryloxy, located on the ring at the six position. Hydrogenated pyrans are specifically useful. Examples of suitable diethers include dihydropyranyl ethers and tetrahydropyranyl ethers.

Nitrogen compounds which may function as stabilizers include high molecular weight oxamide phenolics, for example, 2,2-oxamido bis-[ethyl 3-(3,5-di-tert-butyl-4-bydroxyphenyl)propionate], high molecular weight oxalic anilides and their derivatives, and amine compounds such as thiourea.

Ionizing radiation stabilizing additives are typically used in amounts of 0.001 to 1 wt%, specifically 0.005 to 0.75 wt%, more specifically 0.01 to 0.5 wt%, and still more specifically 0.05 to 0.25 wt%, based on the total weight of the polyester-polycarbonate and poly(1,4-butylene terephtalate).

Each of the foregoing wt% values are based on the combined weights of the polyester-polycarbonate and the poly(1,4-butylene terephthalate) polymer, excluding any other additives. In an embodiment, the thermoplastic composition may comprise an additive including an antioxidant, a heat stabilizer, a light stabilizer, an ultraviolet light absorber, a plasticizer, a mold release agent, a lubricant, an antistatic agent, a pigment, a dye, a flame retardant, a gamma stabilizer, or a combination comprising at least one of the foregoing additives. In a specific embodiment, the foregoing additives are present in a total amount of less than or equal to 5 wt%, based on the total weight of the polyester-polycarbonate and poly(1,4-butylene terephtalate).

It is understood that the amounts and types of the additives are selected such that the desired properties of the thermoplastic composition are not significantly adversely affected.

The thermoplastic composition may be manufactured by methods generally available in the art, for example, in one embodiment, in one manner of proceeding, powdered polyester-polycarbonate polymer, poly(1,4-butylene terephtalate) polymer, and other optional components including stabilizer packages (e.g., antioxidants, gamma stabilizers, heat stabilizers, ultraviolet light stabilizers, and the like) and/or other additives are first blended, in a HENSCHEL-Mixer^{®} high speed mixer. Other low shear processes including but not limited to hand mixing may also accomplish this blending. The blend is then fed into the throat of an extruder via a hopper. Alternatively, one or more of the components may be incorporated into the composition by feeding directly into the extruder at the throat and/or downstream through a sidestuffer. Where desired, the polyester-polycarbonate, poly(1,4-butylene terephtalate) polymer and any desired polymer and/or additives may also be compounded into a masterbatch and combined with a desired polymeric resin and fed into the extruder. The extruder is generally operated at a temperature higher than that necessary to cause the composition to flow. The extrudate is immediately quenched in a water batch and pelletized. The pellets, so prepared, when cutting the extrudate may be one-fourth inch long or less as desired. Such pellets may be used for subsequent molding, shaping, or forming.

In a specific embodiment, a method of preparing a thermoplastic composition comprises melt combining a polyester-polycarbonate polymer and an poly(1,4-butylene terephtalate) polymer. The melt combining can be done by extrusion. In addition, the polyester-polycarbonate and poly(1,4-butylene terephtalate) may be selected such that the optical properties of the thermoplastic composition are optimized to have a light transmission greater than or equal to 80 %, and a haze of less than or equal to 5%, as measured on 2.5 mm molded articles consisting of the polyester-polycarbonate and poly(1,4-butylene terephtalate) and according to ASTM D1003-00, while mechanical performance is at a desirable level. In a further specific embodiment, additives in an amount of 5 wt% or less of the total weight of polycarbonate is combined with the polyester-polycarbonate polymer and poly(1,4-butylene terephtalate) polymer to make the thermoplastic composition. In an embodiment, the proportions of polyester-polycarbonate polymer, poly(1,4-butylene terephtalate) polymer, and where desired, polycarbonate, are selected such that the optical properties of the thermoplastic composition are optimized as above while mechanical performance is at a desirable level.

In a specific embodiment, the thermoplastic composition is extruded using a twin-screw extruder. The extruder is typically operated at a temperatures of 180 to 385°C, specifically 200 to 330°C, more specifically 220 to 300°C, wherein the die temperature may be different. The extruded thermoplastic composition is quenched in water and pelletized.

Shaped, formed, or molded articles comprising the thermoplastic compositions are also provided. Examples of articles comprising the thermoplastic composition include lens covers, protective sheets, films, fibers, dishware, medical applications, automotive, garden equipment, sports and leisure articles, and the like.

While the invention has been described with reference to preferred embodiment, it will be understood by those skilled in the art that various changes may be made, and equivalents substituted, for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out the present invention, but that the invention will include all embodiments falling within the scope of the appended claims.

### EXAMPLES

The materials of Table 1 were used in the Examples.

**Table 1**

| Acronym | Component | Source |
|---|---|---|
| ABS | Acrylonitrile-butadiene-styrene core-shell rubber impact modifier | Sabic Innovative Plastics |
| AO 1010 | Hindered Phenol, Pentaerythritol tetrakis(3,5-di-tert-butyl-4-hydroxyhydrocinnamate) sold as IRGANOX 1010 | Ciba Geigy |
| MBS | Butadiene-styrene-methyl-methacrylate core-shell rubber impact modifier, EXL3691 | Rohm and Haas Company |
| ITR | Isophthalic/terephthalic resorcinol polyester: arylate block that includes structural units derived from at least one 1,3-dihydroxybenzene moiety and at least one aromatic dicarboxylic acid, one of the block in SLX2080 and SLX9010 | Sabic Innovative Plastics |
| PBT | VALOX* 315 Resin Poly(butylene terephthalate) (Mw=105,000 g/mol, PS standard) | Sabic Innovative Plastics |
| PC | Bisphenol A polycarbonate resin (Mw = 30,000, using polycarbonate standards) | Sabic Innovative Plastics |
| PC-High Flow | Bisphenol A polycarbonate resin (Mw = 22,000, using polycarbonate standards) | Sabic Innovative Plastics |
| PC-Med Flow | Bisphenol A polycarbonate resin (Mw = 26,000, using polycarbonate standards) | Sabic Innovative Plastics |
| PETS | Pentaerythritol tetrastearate, mold release | FACI |
| MZP | Mono Zinc Phosphate | Gallard |
| PETS | Sandostab™ 4020 Pentaerythritol tetrakis(3-laurylthiopropionate) | Clariant |
| SLX2080 | Poly(20 mol% isophthalate-terephthalate-resorcinol ester)-co-(80 mol% bisphenol-A carbonate) copolymer (Mw = 25,000 g/mol, PS standards) | Sabic Innovative Plastics |
| SLX 9010 | Poly(90 wt% isophthalate-terephthalate-resorcinol)-co-(10 wt% bisphenol-A carbonate) copolymer (Mw = 25,000 g/mol, PS standards) | Sabic Innovative Plastics |

| | | |
|---|---|---|
| *Trademark of SABIC Innovative Plastics IP B.V. | | |

### Preparation Processes/Techniques

The compositions used in the Examples were made as follows. All thermoplastic compositions except where indicated were compounded on a 25 mm Werner and Pfleiderer co-rotating twin screw extruder with a vacuum vented mixing screw, at a barrel and die head temperature between 240 and 265°C, and a screw speed of 150 to 300 revolutions per minute. The extruder had eight independent feeders and can be operated at a maximum rate of 300 pounds per hour. The twin-screw extruder had enough distributive and dispersive mixing elements to produce good mixing between the polymer compositions. The extrudate was cooled through a water bath, and then pelletized. The compositions are subsequently molded according to ISO 294 on an Engel injection-molding machine with a set temperature of approximately 240 to 290°C. The pellets were dried for 3 to 4 hours at approximately 80°C in a forced-air circulating oven prior to injection molding. It will be recognized by one skilled in the art that the method is not limited to these temperatures or to this apparatus.

### Testing Processes/Techniques

Melt volume rate (MVR) was determined using pellets dried for 2 hours at 80°C, in accordance with ISO 1133 at 265°C at a load of 2.16 kg or 295°C at a load of 2.2 kg, at dwelling time of 240 seconds and 0.0825 inch (2.1 mm) orifice, and is reported in cubic centimeters per 10 minutes (cm3/10 min).

Notched Izod impact ("NII" or "INI") was measured on 80 x 10 x 4 mm (length x wide x thickness) impact bars at 23°C according to ISO 180, using a 5.5 Joule pendulum, and is reported in kilojoules per squared meter (kJ/m2).

Haze and luminous transmittance were measured according to ASTM D 1003 using a 2.5 mm color chip, and are reported in percentages as % Haze (%H) and % Transmittance (%T).

Tensile properties were tested according to ISO 527 on 150 x 10 x 4 mm (length x wide x thickness) injection molded bars at 23°C with a crosshead speed of 5 mm/min. Percent retention of tensile elongation at break as determined for ESCR tests (environmental stress cracking resistance), and is equal to 100 x (tensile elongation at break after the ESCR test)/(tensile elongation at break before ESCR). The test is as follows: a tensile bar of the composition is exposed to the chemical, followed by ISO 527 tensile test. Tensile elongation at break and tensile stress at yield are the values obtained.

Heat deflection temperature (HDT) was measured according to ISO 75 on 80 x 10 x 4 mm (length x wide x thickness) injection molded bars.

Vicat softening temperature was measured according to ISO 306 on 80 x 10 x 4 mm (length x wide x thickness) injection molded bars.

Table 2 summarizes the test protocols. Room temperature (RT) is 23°C.

**Table 2**

| | Test Standard | Default Specimen Type | Units |
|---|---|---|---|
| ISO HDT Test | ISO 75 | Bar - 80 x 10 x 4 mm | °C |
| ISO Tensile Test | ISO 527 | Multi-purpose ISO 3167 Type A | MPa |
| ISO Izod at Room Temperature, 23°C | ISO 180 | Multi-purpose ISO 3167 Type A | kJ/m² |
| ISO Melt Volume Rate Test | ISO 1133 | Pellets | cm³/10 min |
| ISO Vicat Softening Temperature | ISO 306 | Bar - 80 x 10 x 4 mm | °C |

### EXAMPLES 1-5 AND COMPARATIVE EXAMPLES 1-4

For Examples 1-5 and Comparative Examples 1-4, the techniques and procedures described above were followed with the compositions indicated in Table 3.

Table 3 shows the results we obtained for the indicated examples. The term "Ex" in Table 3 (and through the Examples) means Example. The term "CEx" in Table 3 (and throughout the Examples) means Comparative Example. The amounts indicated in Table 3 (and all of the Tables) are in weight percent, based on the respective composition.

**Table 3**

| | | CEx1 | CEx2 | Ex 1 | Ex2 | Ex3 | CEx3 | CEx4 | Ex4 | Ex5 |
|---|---|---|---|---|---|---|---|---|---|---|
| PC | Wt% | 47 | 47 | 32 | 17 | | | 47 | 17 | |
| SLX2080 | Wt% | | | 15 | 30 | 47 | | | 30 | 47 |
| PBT | Wt% | 92 | 45 | 45 | 45 | 45 | 92 | 45 | 45 | 45 |
| MBS | Wt% | 8 | 8 | 8 | 8 | 8 | | | | |
| ABS | Wt% | | | | | | 8 | 8 | 8 | 8 |
| ITR | Wt% | 0 | 0 | 3 | 6 | 9.4 | 0 | 0 | 6 | 9.4 |
| INI 0C | kJ/m² | 5.5 | 23.3 | 39.6 | 56.3 | 59.2 | 5.5 | 17.4 | 55.2 | 67.4 |
| INI -10°C | kJ/m² | 5.1 | 16.2 | 17.0 | 53.8 | 58.9 | 5.1 | 17.2 | 16.8 | 61.1 |
| INI -15°C | kJ/m² | 5.1 | 15.9 | 17.6 | 40.7 | 39.9 | 5.5 | 16.4 | 14.1 | 25.1 |
| INI -20°C | kJ/m² | 4.6 | 15.3 | 15.7 | 15.9 | 18.0 | 5.2 | 16.1 | 16.5 | 12.8 |
| INI -25°C | kJ/m² | 5.0 | 15.2 | 15.8 | 11.6 | 12.7 | 5.6 | 16.3 | 14.2 | 8.7 |
| INI -30°C | kJ/m² | 17.6 | 13.7 | 15.1 | 8.1 | 10.3 | 5.0 | 15.3 | 8.3 | 13.1 |
| INI -35°C | kJ/m² | 4.7 | 13.4 | 11.3 | 7.8 | 10.3 | 5.3 | 15.2 | 7.1 | 7.5 |
| INI -40°C | kJ/m² | 4.7 | 11.9 | 9.4 | 5.7 | 8.8 | 5.0 | 14.3 | 7.2 | 7.0 |
| Ductile at 0°C? | | No | No | Yes | Yes | Yes | No | No | Yes | Yes |
| DBT | °C | >0 | >0 | -5 | -15 | -15 | >0 | >0 | -5 | -10 |

The results indicate that compositions in accordance to the invention were ductile at 0°C or below and that the compositions used in the Comparative Examples were not. Further, the results showed that the composition of the invention exhibited a lower ductile to brittle transition temperature as compared to compositions that did not contain the ITR (the at least one block copolyestercarbonate comprising organic carbonate blocks alternating with arylate blocks). Example 1 (Ex1), for instance, shows that when the ITR weight percent was 3 weight percent, the ductile to brittle transition temperature (DBT) was lowered by 5°C as compared to Comparative Example 1 and 2, which did not contain any ITR. The DBT is the temperature at which the compositions first become brittle.

Example 2 shows that when the ITR weight percent was 6 weight percent, the DBT was lowered by 15°C as compared to Comparative Example 1 and 2, which did not contain any ITR. Example 3 shows that when the ITR weight percent was 9 weight percent, the DBT was lowered by 15°C as compared to Comparative Example 1 and 2, which did not contain any ITR. Example 4 shows that when the ITR weight percent was 6 weight percent, the DBT was lowered by 5°C as compared to Comparative Example 3 and 4, which did not contain any ITR. Example 5 shows that when the ITR weight percent was 9 weight percent, the DBT was lowered by 10°C as compared to Comparative Example 3 and 4, which did not contain any ITR. The compositions in Examples 1, 2, 3, 4, and 5 all were ductile at a 0°C, while the compositions in Comparative Examples 1, 2, 4 and 4 were not ductile at 0°C.

### EXAMPLES 6-7 AND COMPARATIVE EXAMPLES 5-14

For Examples 6-7 and Comparative Examples 5-14, the techniques and procedures described above were followed with the compositions indicated in the results shown in Table 4.

The results indicate that compositions in accordance to the invention were ductile at 0°C or below and that the compositions used in the Comparative Examples were not. Further, the results showed that the compositions of the invention exhibited a lower ductile to brittle transition temperature as compared to composition that did not contain the ITR (the at least one block copolyestercarbonate comprising organic carbonate blocks alternating with arylate blocks.)

**Table 4**

| | | CEx 5 | CEx 6 | CEx 7 | CEx 8 | CEx 9 | Ex 6 | CEx 10 | Ex 7 | CEx 11 | CEx 12 | CEx 13 | CEx 14 |
|---|---|---|---|---|---|---|---|---|---|---|---|---|---|
| PC | Wt% | 53.7 | 24.4 | 52.6 | 23.9 | 50.4 | 22.9 | 48.2 | 21.9 | 46.0 | 20.9 | 43.8 | 19.9 |
| SLX2080 | Wt% | | 29.3 | | 28.7 | | 27.5 | | 26.3 | | 25.1 | | 23.9 |
| PBT | Wt% | 43.9 | 43.9 | 43.0 | 43.0 | 41.2 | 41.2 | 39.4 | 39.4 | 37.6 | 37.6 | 35.8 | 35.8 |
| MBS | Wt% | 2.00 | 2.00 | 4.00 | 4.00 | 8.00 | 8.00 | 12.00 | 12.00 | 16.00 | 16.00 | 20.00 | 20.00 |
| PETS | Wt% | 0.05 | 0.05 | 0.05 | 0.05 | 0.05 | 0.05 | 0.05 | 0.05 | 0.05 | 0.05 | 0.05 | 0.05 |
| AO 1010 | Wt% | 0.20 | 0.20 | 0.20 | 0.20 | 0.20 | 0.20 | 0.20 | 0.20 | 0.20 | 0.20 | 0.20 | 0.20 |
| MZP | Wt% | 0.10 | 0.10 | 0.10 | 0.10 | 0.10 | 0.10 | 0.10 | 0.10 | 0.10 | 0.10 | 0.10 | 0.10 |
| %ITR block in blend | Wt% | 0 | 5.9 | 0.0 | 5.7 | 0.0 | 5.5 | 0.0 | 5.3 | 0.0 | 5.0 | 0.0 | 4.8 |
| Properties | | | | | | | | | | | | | |
| INI at 23°C, 5.5 J/m² | kJ/ m² | 7 | 6 | 9 | 9 | 34 | 51 | 46 | 52 | 49 | 49 | 47 | 44 |
| INI at 0°C, 5.5 J/ m² | kJ/ m² | 7 | 6 | 9 | 8 | 38 | 59 | 49 | 57 | 51 | 53 | 50 | 50 |
| INI at 10°C, 5.5 J/m2 | kJ/ m² | 7 | 6 | 9 | 8 | 33 | 57 | 47 | 55 | 48 | 53 | 48 | 50 |
| INI at -15°C, 5.5 J/m2 | kJ/ m² | 7 | 4 | 9 | 6 | 19 | 54 | 45 | 55 | 47 | 51 | 46 | 49 |
| INI at -20°C, 5.5 J/m2 | kJ/ m² | 7 | 5 | 9 | 7 | 18 | 35 | 43 | 54 | 45 | 52 | 44 | 48 |
| INI at -25°C, 5.5 J/m2 | kJ/ m² | 7 | 5 | 9 | 7 | 18 | 15 | 42 | 55 | 44 | 51 | 42 | 48 |
| INI at -30°C, 5.5 J/m2J | kJ/ m² | 7 | 5 | 8 | 6 | 17 | 12 | 38 | 49 | 43 | 50 | 42 | 46 |
| INI at -35°C, 5.5 J/m2 | kJ/ m² | 7 | 5 | 8 | 5 | 16 | 11 | 35 | 45 | 39 | 48 | 40 | 46 |
| INI at -40°C, 5.5 J/m² | kJ/ m² | 7 | 4 | 8 | 5 | 14 | 8 | 23 | 40 | 36 | 46 | 39 | 44 |
| Ductile at 0°C | | No | No | No | No | Yes | Yes | Yes | Yes | Yes | Yes | Yes | Yes |
| DBT | °C | >0 | >0 | >0 | >0 | -15 | -25.0 | -40.0 | <-40 | <-40 | <-40 | <-40 | <-40 |

The results shown in Table 4 indicate that compositions in accordance to the invention were ductile at 0°C or below and that the compositions used in the Comparative Examples were not. Further, the results showed that the compositions of the invention exhibited a lower ductile to brittle transition temperature as compared to compositions that did not contain the ITR (the at least one block copolyestercarbonate comprising organic carbonate blocks alternating with arylate blocks).

Example 6, for instance, shows that when the ITR weight percent was 5.5 weight percent, the DBT was lowered by 10°C, as compared to Comparative Example 9. Example 7 shows that when the ITR weight percent was 5.3 weight percent, DBT was lowered by at least 5°C, as compared to Comparative Example 10. Comparative Examples 5, 6, 7, and 8, which contain an impact modifier that was less than or equal to 4 weight % exhibited brittle properties at 0°C. Comparative Examples 12 and 14, which had an impact modifier content that was more than or equal to 16 weight percent, failed to lower the DBT by at least 5°C, as compared to Comparative Example 11 and Comparative Example 13.

For Examples 8-9 and Comparative Examples 15-16, the techniques and procedures described above were followed with the compositions indicated in Table 5. These Examples evaluated the performance of compositions having polycarbonate of different molecular weight.

**Table 5**

| | | CEx 15 | Ex8 | CEx 16 | Ex 9 |
|---|---|---|---|---|---|
| PC - high flow | wt% | 50.4 | 22.9 | | |
| PC - med flow | wt% | | | 50.4 | 22.9 |
| SLX2080 | wt% | | 27.5 | | 27.5 |
| PBT | wt% | 41.2 | 41.2 | 41.2 | 41.2 |
| MBS | wt% | 8.00 | 8.00 | 8.00 | 8.00 |
| PETS | wt% | 0.05 | 0.05 | 0.05 | 0.05 |
| AO 1010 | wt% | 0.20 | 0.20 | 0.20 | 0.20 |
| MZP | wt% | 0.10 | 0.10 | 0.10 | 0.10 |
| %ITR block in blend | wt% | 0 | 5 | 0 | 5 |
| MVR, 260°C - 2.16 kg - 4 min | cc/10min | 12.3 | 21.3 | 20.8 | 18.5 |
| Flexural Modulus | MPa | 2090 | 1959 | 2074 | 1977 |
| Vicat B/120 | °C | 119 | 82 | 115 | 85 |
| INI at 0°C - 5.5 J/m2 | kJ/m² | 30 | 57 | 38 | 60 |
| INI at -5°C - 5.5 J | kJ/m² | 17 | 53 | 35 | 56 |
| INI at -10°C - 5.5 J | kJ/m² | 17 | 52 | 22 | 52 |
| INI at -15°C - 5.5 J | kJ/m² | 17 | 48 | 18 | 45 |
| INI at -20°C - 5.5 J | kJ/m² | 15 | 32 | 18 | 35 |
| INI at -25°C - 5.5 J | kJ/m² | 16 | 16 | 17 | 22 |
| INI at -30°C - 5.5 J | kJ/m² | 14 | 8 | 15 | 12 |
| INI at -35°C - 5.5 J | kJ/m² | 11 | 8 | 14 | 9 |
| DBT | °C | -5.0 | -25 | -10 | -25 |

The results indicate that compositions in accordance to the invention were ductile at 0°C or below and that the compositions used in the Comparative Examples were not. Further, the results showed that the compositions of the invention exhibited a lower ductile to brittle transition temperature as compared to compositions that did not contain the ITR (the at least one block copolyestercarbonate comprising organic carbonate blocks alternating with arylate blocks). Table 5 clearly shows that an ITR weight percent that is more than 3 weight% is needed to lower the DBT by at least 5°C. Example 8 shows that when the ITR weight percent was 5 weight percent, the DBT was improved by 20°C, as compared to Comparative Example 15, which did not have any ITR. Example 9 shows that when the ITR weight percent was 5 weight percent, the DBT was improved by 15°C, as compared to Comparative Example 16, which did not have any ITR.

### EXAMPLE 10 AND COMPARATIVE EXAMPLE 17

For Example 10 and Comparative Example 17, the techniques and procedures described above were followed with the compositions indicated in Table 6. These examples evaluated the performance of our compositions containing flame retardants.

**Table 6**

| | | CEx 17 | Ex 10 |
|---|---|---|---|
| PBT | wt% | 39 | 29 |
| PC | wt% | 25 | 25 |
| SLX9010 | wt% | 0 | 10 |
| MBS | wt% | 10 | 10 |
| BR-PC | wt% | 20 | 20 |
| LDPE | wt% | 2 | 2 |
| Antimony (Sb₂O₃) | wt% | 3.5 | 3.5 |
| AO1010 | wt% | 0.1 | 0.1 |
| PETS | wt% | 0.3 | 0.3 |
| MZP | wt% | 0.1 | 0.1 |
| %ITR block in blend | | 0 | 9 |
| MVR(265,2.16kg,4m) | cc/10min | 5.5 | 4.9 |
| UL 94 Flame test at 1.6mm | | V0 | V0 |
| Notched Izod at 23°C | J/m | 584 | 655 |
| Notched Izod at 0°C | J/m | 525 | 589 |
| Notched Izod at -10°C | J/m | 309 | 569 |
| Notched Izod at -20°C | J/m | 248 | 501 |
| Ductile at 0 °C | | Yes | Yes |
| DBT | °C | -5.0 | <-20 |

The results indicate that compositions in accordance to the invention were ductile at 0°C or below and that the compositions used in the Comparative Examples were not. Further, the results showed that the compositions of the invention exhibited a lower ductile to brittle transition temperature as compared to compositions that did not contain the ITR (the at least one block copolyestercarbonate comprising organic carbonate blocks alternating with arylate blocks). Table 6 clearly shows that an ITR weight percent that is more than 3 weight% is needed to lower the DBT by at least 5°C. Example 10, for instance, shows that when the ITR weight percent was 9 weight percent, the DBT was improved by at least 15°C, as compared to Comparative Example 17, which did not have any ITR.

## Claims

1. A thermoplastic composition having improved low temperature impact performance comprising the following and any reaction products thereof:
a) from 3 to 30 weight percent of at least one block copolyestercarbonate comprising organic carbonate blocks alternating with arylate blocks, said arylate blocks comprising structural units derived from at least one 1,3-dihydroxybenzene moiety and at least one aromatic dicarboxylic acid;
b) from 4 to 16 weight percent of at least one impact modifier, wherein the impact modifier is selected from the group consisting of an acrylic grafted polymer of a conjugated diene and a methacrylic grafted polymer of a conjugated diene, wherein the impact modifier is co-polymerized with a vinyl aromatic compound, or wherein the impact modifier is a core/shell copolymer of methyl methacrylate, butadiene and styrene or a core/shell copolymer of acrylonitrile, butadiene and styrene; and
c) from 34 to 93 weight percent of a blend of at least one polyester and at least one polycarbonate, wherein the at least one polyester is poly(1,4-butylene terephthalate) and the at least one polycarbonate is bisphenol A polycarbonate;
wherein the thermoplastic composition is ductile at 0°C or below and the thermoplastic composition exhibits a lower ductile to brittle transition temperature as compared to a second thermoplastic composition that does not contain the at least one block copolyestercarbonate comprising organic carbonate blocks alternating with arylate blocks.

2. An article made from the composition of any of claim 1.

## Patentansprüche

1. Thermoplastische Zusammensetzung mit verbesserter Schlagzähigkeit bei niedrigen Temperaturen, umfassend das Folgende und jegliche Reaktionsprodukte desselben:
a) 3 bis 30 Gewichtsprozent mindestens eines Blockcopolyestercarbonats, umfassend organische Carbonatblöcke alternierend mit Arylatblöcken, wobei die Arylatblöcke Struktureinheiten umfassen, die aus mindestens einem 1,3-Dihydroxybenzol-Teil und mindestens einer aromatischen Dicarbonsäure abgeleitet sind;
b) 4 bis 16 Gewichtsprozent mindestens eines Schlagzähmodifizierers, wobei der Schlagzähmodifizierer ausgewählt ist aus der Gruppe, bestehend aus einem Acryl-gepfropften Polymer eines konjugierten Diens und einem Methacrylsäure-gepfropften Polymer eines konjugierten Diens, wobei der Schlagzähmodifizierer mit einer aromatischen Vinylverbindung copolymerisiert ist, oder wobei der Schlagzähmodifizierer ein Kern/Schale-Copolymer aus Methylmethacrylat, Butadien und Styrol oder ein Kern/Schale-Copolymer aus Acrylnitril, Butadien und Styrol ist; und
c) 34 bis 93 Gewichtsprozent einer Mischung aus mindestens einem Polyester und mindestens einem Polycarbonat, wobei der mindestens eine Polyester Poly(1,4-butylenterephthalat) ist und das mindestens eine Polycarbonat Bisphenol A-Polycarbonat ist;
wobei die thermoplastische Zusammensetzung bei 0°C oder darunter duktil ist und die thermoplastische Zusammensetzung eine niedrigere Übergangstemperatur von duktil zu spröde im Vergleich zu einer zweiten thermoplastischen Zusammensetzung aufweist, die nicht das mindestens eine Blockcopolyestercarbonat, umfassend organische Carbonatblöcke alternierend mit Arylatblöcken, enthält.

2. Gegenstand, hergestellt aus der Zusammensetzung nach Anspruch 1.

## Revendications

1. Composition thermoplastique présentant une performance améliorée aux chocs à basse température, comprenant ce qui suit et tous produits réactionnels de celle-ci :
a) de 3 à 30 pour cent en poids d'au moins un copolyestercarbonate séquencé comprenant des séquences de carbonate organique en alternance avec des séquences d'arylate, lesdites séquences d'arylate comprenant des motifs structuraux dérivant d'au moins un fragment 1,3-dihydroxybenzène et d'au moins un acide dicarboxylique aromatique ;
b) de 4 à 16 pour cent en poids d'au moins un modificateur de choc, dans lequel le modificateur de choc est choisi dans le groupe constitué d'un polymère greffé acrylique d'un diène conjugué et d'un polymère greffé méthacrylique d'un diène conjugué, dans lequel le modificateur de choc est copolymérisé avec un composé aromatique vinylique, ou dans lequel le modificateur de choc est un copolymère noyau/coque de méthacrylate de méthyle, de butadiène et de styrène ou un copolymère noyau/coque d'acrylonitrile, de butadiène et de styrène ; et
c) de 34 à 93 pour cent en poids d'un mélange homogène contenant au moins un polyester et au moins un polycarbonate, dans lequel le au moins un polyester est un poly(téréphtalate de 1,4-butylène) et le au moins un polycarbonate est un polycarbonate de bisphénol A ;
dans laquelle la composition thermoplastique est ductile à une température inférieure ou égale à 0 °C et la composition thermoplastique présente une température de transition ductile à cassante plus basse en comparaison avec une seconde composition thermoplastique qui ne contient pas le au moins un copolyestercarbonate séquencé comprenant des séquences de carbonate organique en alternance avec des séquences d'arylate.

2. Article fabriqué à partir de la composition selon la revendication 1.
